(19) **Europäisches Patentamt**

**European Patent Office**

**Office européen des brevets**

(11) Veröffentlichungsnummer : **0 430 150 B1**

(12) **EUROPÄISCHE PATENTSCHRIFT**

(45) Veröffentlichungstag der Patentschrift :
**27.09.95 Patentblatt 95/39**

(51) Int. Cl.$^6$ : **G01N 21/62,** G01N 21/76,
C12M 1/34

(21) Anmeldenummer : **90122586.2**

(22) Anmeldetag : **27.11.90**

(54) **Verfahren zur Prüfung der Qualität und der Qualitätsänderungen von biologischen Systemen und mit ihnen wechselwirkenden organisch-chemischen Verbindungen mittels Messung der ultraschwachen Photonenemission.**

(30) Priorität : **29.11.89 DE 3939411**

(43) Veröffentlichungstag der Anmeldung :
**05.06.91 Patentblatt 91/23**

(45) Bekanntmachung des Hinweises auf die Patenterteilung :
**27.09.95 Patentblatt 95/39**

(84) Benannte Vertragsstaaten :
**BE DE FR LU NL**

(56) Entgegenhaltungen :
**DE-A- 3 339 750**
**GB-A- 2 086 038**

(73) Patentinhaber : **Popp, Fritz-Albert**
**Opelstrasse 10**
**D-67661 Kaiserslautern (DE)**

(72) Erfinder : **Popp, Fritz-Albert**
**Opelstrasse 10**
**D-67661 Kaiserslautern (DE)**

(74) Vertreter : **Dr. Fuchs, Dr. Luderschmidt Dr. Mehler, Dipl.-Ing. Weiss Patentanwälte**
**Postfach 46 60**
**D-65036 Wiesbaden (DE)**

## Beschreibung

Die Erfindung betrifft ein Verfahren zur Prüfung der Qualität und/oder Qualitätsänderung biologischer Systeme und/oder Lebensmittel und/oder mit diesen wechselwirkenden organisch-chemischen Verbindungen mit Hilfe der ultraschwachen Photonenemission. Die Methode besteht darin, eine sehr schwache Lichtemission aus biologischen Systemen und/oder ein schwaches Nachleuchten nach definierter Anregung der Probeobjekte mit moderner Technik meßbar darzustellen und mit bekannten Qualitätsnormen zu korrelieren.

Das Verfahren soll einerseits die Möglichkeit bieten, die Qualität eines biologischen Systems im Sinne von Erwin Schrödingers übergreifendem Qualitätsbegriff mit Hilfe von Meßparametern reproduzierbar wiederzugeben, andererseits aber auch durch Umwelteinflüsse auftretende oder durch unerwartete Wechselwirkungen mit gezielt eingesetzten chemischen Produkten verursachte Änderungen am Qualitätsinhalt biologischer Systeme unmittelbar anzuzeigen. Erwin Schrödinger geht von der Auffasung aus, daß Leben einen Zustand hoher Ordnung darstellt (E. Schrödinger: "Was ist Leben? Die lebende Zelle mit den Augen des Physikers betrachtet". Francke, Bern 1946, Sammlung Dalp, Bd. 1). Nahrung ist dabei in erster Linie ein Ordnungsfaktor, der dem Lebewesen hilft, seinen spezifischen Ordnungszustand aufzubauen und zu stabilisieren. Die Qualität eines Lebensmittels ist dann im Sinne Erwin Schrödingers lediglich ein Maß für die Fähigkeit der Nahrung, diese Aufgabe am Verbraucher zu erfüllen. Die Qualität eines biologischen Systems ist demgemäß eine Funktion dieses Ordnungszustandes. Wird der Ordnungszustand eines biologischen Systems durch Umwelteinflüsse oder sonstige unerwünschte Wechselwirkungen mit Fremdstoffen beeinträchtigt, so sinkt der Qualitätsinhalt dieses Systems.

Bisher bekannte Verfahren zur Erfassung der Qualität und der Feststellung von Qualitätsänderungen biologischer Systeme beruhten auf der subjektiven sensorischen Beurteilung einzelner Personen, auf chemischen und biochemischen Analyseverfahren sowie auf physikalischen Verfahren, die sich u.a. bereits der Photonenemission aus biologischen Systemen bedienten. (DE-OS 3 038 255, DE-OS 3 040 855 und US-PS 4.458.531)

Sensorische Verfahren haben zwar den Vorteil, alle Einflußfaktoren berücksichtigen zu können, weisen aber den großen Nachteil auf, subjektiv und zumindest im Vergleich verschiedener prüfender Personen nur bedingt reproduzierbar zu sein. Im Falle von Lebensmittelprüfungen ist es sehr schwierig, vorurteilsfreie Kriterien für die Qualität verarbeiteter Produkte zu erstellen. Bei Frischprodukten ist eine Beurteilung nach überkommenen Normen eher möglich. So wurden DIN-Normen zur Schulung von Sensorikern erstellt, um diesen die Möglichkeit zu geben, mit Hilfe festgelegter statistischer Verfahren eine in gewissen Grenzen reproduzierbare Lebensmittelqualitätsprüfung zu ermöglichen. Diese Normen erstrecken sich sowohl auf Parameter wie Prüfraum, Prüfgut und Prüfverfahren, als auch auf die durch Geschmacksstoffe, Geruchsstoffe und Mikro- sowie Makrostruktur hervorgerufenen auslösenden Faktoren und Einzeleindrücke. Es hat sich aber auch gezeigt, daß sich die dabei verwendeten sensorischen Parameter bisher nicht durch chemische und physikalische Untersuchungsmethoden quantifizieren ließen.

Verfahren zur Erfassung von Qualitätsänderungen aufgrund äußerer Einflußfaktoren, insbesondere von Umweltschädigungen, beruhen auf dem Eisatz von Bioindikatoren, wobei deren Aussehen und Verhaltensweise beobachtet und registriert wird. Auch hier ist die Interpretation mehr oder weniger subjektiv. Ökotoxologische Prüfungen finden in mehreren Stufen statt und sind außerdem sehr zeitaufwendig (siehe Tabelle 1). In der Grundstufe wird die akute Toxizität einer Verbindung z.B. an einer Fischart und einer Wasserflohart nach einmaliger Applikation während eines Zeitraumes von 1 bis 4 Tagen bestimmt. In Stufe 1 wird die langfristige Toxizität anhand von Prüfparametern wie der Schwellenkonzentration, der No-observed-Effect-Concentration (NOEC-Werte) und letalen Dosen ermittelt, wobei u. U. über einen Zeitraum von vier Wochen beobachtet werden muß. Die Stufe 2 schließlich bildet ein individuelles stoffspezifisches Prüfprogramm, wobei versucht wird, aufgetretene Schädigungen im Vergleich mit einer Liste von 25 toxischen Verbindungen ("25-Stoffe-Programm", Tabelle 2) mehr oder weniger einzuordnen und dadurch qualitativ zu erfassen.

Die chemische und biochemische Analytik dagegen liefert eindeutig reproduzierbare Ergebnisse. Mit den unterschiedlichsten chemischen Analyseverfahren können damit schon geringste Spuren einzelner Stoffe nachgewiesen werden. Eine quantitative Auswertung und eine damit verbundene kausale Zuordnung für die Bewertung der Qualität eines biologischen Systems ist aber nur dann möglich, wenn gezielt nach dem jeweiligen Stoff gesucht wird. Synergistische Effekte solcher Stoffe (z.B. ein nicht-additives Verhalten) oder gar kooperatives Verhalten in Verbindung mit unbekannten Stoffen können damit nicht wahrgenommen werden. Zudem ist die quantitative Erfassung aller relevanten Einzelstoffe für eine Schadensbegutachtung außerordentlich zeitaufwendig.

Eine allgemein verbindliche Aussage zur Qualität von Ernteprodukten ist nur bedingt möglich. Sie hängt nämlich vom Prüfzeitpunkt nach der Ernte ab. So zeigen Pflanzen, die durch hohe Düngegaben jung gehalten wurden nach ihrer Ernte noch erhebliche Enzymaktivitäten. Dies schlägt dann bei der Lagerhaltung zu Buche und äußert sich in schneller Qualitätsabnahme während der Lagerung. Dazu kommen bei überdüngten Pflanzen noch labile Gewebestrukturen, die einem Befall mit Schadpilzen weniger Widerstand entgegensetzen. Ein zusätzlicher Nachteil besteht in der Tatsache, daß es sich bei den chemischbiochemischen Verfahren in der Regel um "zerstörende Verfahren" handelt.

Von den bisherigen Analyseverfahren unter Ausnutzung der Biophotonenemission beschreibt die DE-OS 30 38 255 die biologischen Wirkungen von äußeren Einflüssen auf Zellkollektive. Dabei wird die ultraschwache Photonenemission eines jeweils gesunden und sterbenden Zellkollektivs vor der Einwirkung des äußeren Einflusses mittels der Photonenzählstatistik gemessen. Sodann wird aus der Änderung der Photonenemission nach Einwirkung des äußeren Einflußes im Vergleich mit den unterschiedlichen Emissionen von gesundem und sterbendem Zellkollektiv auf einen schädigenden oder regenerierenden Charakter des äußeren Einflußes rückgeschlossen.

Die US-PS 4.458.531 beschreibt, wie mittels Messung der Intensität und/oder der Photonenzählstatistik die Einwirkung äußerer Faktoren auf Zellkollektive im Sinne von schädigendem oder regenerierendem Einfluß bestimmt werden kann.

In einer früheren Veröffentlichung (F.-A. Popp, Biophotonen-analyse der Lebensmittelqualität, in: A. Meier-Ploeger, H. Vogtmann (Hrsg.), Lebensmittelqualität - ganzheitliche Methoden und Konzepte, Alternative Konzepte Bd. 66, Verlag C.F. Müller, Karlsruhe, Seiten 87 - 112) wurde bereits dargelegt, daß es prinzipiell möglich ist, minimale Unterschiede im Zustand biologischer Systeme, die durch äußere Einflußparameter hervorgerufen wurden mit Hilfe der ultraschwachen Photonenemission zu erfassen. So wurde gezeigt, daß z.B. verschiedene Gemüsearten unterschiedliche Photonenemissionsraten in Abhängigkeit von ihrer Anbauweise oder Eier unterschiedliche Emissionsraten in Abhängigkeit vom Haltungssystem der jeweiligen Hühner aufweisen. Das dabei verwendete Verfahren basierte aber lediglich auf der Prüfung einer unterschiedlichen Photonenzählstatistik und ließ somit nur Interpretationen über die Reaktion des jeweiligen biologischen Systems auf die entsprechenden Einfluß- und Umweltfaktoren zu. Eine eindeutige Aussage aber über die Qualität im Sinne Schrödingers und damit über den Ordnungszustand des Systems war damit aber noch nicht möglich.

Die vorliegende Erfindung hat daher zum Ziel, ein Verfahren zur Verfügung zu stellen, das es erlaubt, die Qualität biologischer Systeme nach dem umfassenden Qualitätsbegriff von Schrödinger reproduzierbar zu bestimmen bzw. Qualitätsänderungen zu verfolgen. Dies wird erreicht, indem Meßparameter der ultraschwachen Photonenemission mit den Methoden der vergleichenden statistischen Analyse mit vorgegebenen Qualitätskriterien für die Zustandsparameter des biologischen Systems und/oder Lebensmittels korreliert werden.

Als Meßparameter für die ultraschwache Photonenemisson können dabei sowohl statische als auch dynamische Kennwerte herangezogen werden. Als statische Kennwerte können z.B. dienen:
- die Eigenintensitäten DA der Proben ohne externe Anregung,
- die Intensitäten NB nach externer Anregung, ausgedrückt z.B. als Mittelwerte der ersten 20 - 50 Meßwerte nach der Anregung.

Die externe Anregung kann mittels elektromagnetischer Strahlung, Ultraschall, thermischer Beeinflussung, chemischer Agenzien oder unter der Einwirkung von Organismen erfolgen. Strahlungsanregung kann im weißen Licht oder in verschiedenen Spektralbereichen bei diskreten Wellenlängen stattfinden. Die Anregungsleistung liegt dabei in der Regel im Bereich von 100 bis 300 Watt. Auch die Ultraschallanregung kann bei diskreten Wellenlängen erfolgen, üblicherweise mit Leistungen zwischen 10 bis 100 Watt. Bei Einsatz von thermischer Anregung bewegt man sich am günstigsten im Temperaturintervall von 0° bis 60°C. Bei Verwendung von externer Anregung wird die Varianz der gemessenen Photonenemission innerhalb eines bestimmten Meßintervalls bestimmt und der Mittelwert der ersten 20 bis 50 Meßwerte nach der Anregung als Meßparameter verwendet.

Neben den stationären Kennwerten bieten dynamische Kennwerte die Möglichkeit das Abklingverhalten der Photonenemission aus den Proben exakt zu beschreiben. Hierfür dienen z.B. folgende Parameter:
- die Abklingfaktoren $A$ einer angepaßten hyperbolischen Zerfallsfunktion $i = i_o/t^A$, worin i die aktuelle Intensität, $i_o$ die Anfangsintensität (erster Meßwert nach Anregung) und t die Zeit (in sec) bedeuten,
- die Fehlerabweichung $Q_H$ vom bestangepaßten hyperbolischen Abklingverhalten,
- Die normierte $X^2$-Fehlerabweichung ($X_H$) vom bestangepaßten hyperbolischen Abklingverhalten,
- Das Verhältnis ($X_{EH}$) von der normierten $X^2$-Fehlerabweichung von der bestangepaßten exponentiellen Abklingfunktion ($X_E$) zur normierten Fehlerabweichung von der bestangepaßten hyperbolischen Abklingfunktion ($X_H$),
- das gleiche Verhältnis für nicht normierte Abweichungen ($Q_{EH}$)

Die so gewonnenen Meßparameter werden zusammen mit vorgegebenen Zustands- und Einflußparametern in einer Datenmatrix erfaßt und nach den üblichen Methoden der statistischen Analyse (Korrelations-, Faktoren- und Varianzanalyse) untersucht. Die Einflußparameter erhält man durch vergleichende Messungen von Proben, die verschiedenen Einflüssen wie z.B. Zucht, Anbau, Haltung, Behandlung, Bodenbeschaffenheit, Klima und anderen Umweltfaktoren unterlagen, während die Zustandsparameter durch Vergleichsmessungen aus Proben verschiedener Sorten, Konsistenz, Haltbarkeit, Vitalität u.ä. gewonnen werden. Die Einordnung dieser Proben in eine Qualitätskategorie erfolgte dabei nach den bisher bekannten Methoden der Ernährungsphysiologie, Lebensmittelchemie, Sensorik u.a. Zusätzliche Parameter können auch aus der Abhängigkeit der Photonenemission von der Menge des Probematerials sowie nach simulierter Verdauung durch in-vitro-Behandlung mit Enzymen gewonnen werden. Die vorliegende Erfindung bietet nun die Möglichkeit, die einmal nach der Einwirkung bestimmter Einflußparameter definierten Qualitätskategorien einer untersuchten Probe auch für Proben, die unbekannten Einflußparametern unterlagen über ihre aus der statistischen Analyse bestimmte Korrelation mit der ultraschwachen photonenemission festzulegen und so Rückschlüsse auf die unbekannten, die Qualitätskategorie bestimmenden Einflußparameter zu ermöglichen.

Zur Bestimmung der Korrelationsfaktoren für die Erfassung umweltschädigender Einflüsse wählt man als Einflußparameter naheliegenderweise die vom Umweltbundesamt der Bundesrepublik Deutschland zusammengestellte 25-Stoffe Liste (Tabelle 2) und als Zustandsparameter die in den einzelnen Stufen der bisherigen Prüfmethode des Umweltbundesamts verwendeten Prüfparameter (Tabelle 1). Daraus kann dann die Korrelation der Photonenemission mit und ohne vorherige Anregung des biologischen Systems (Bioindikator oder Prüforganismus) sowie des Abklingverhaltens der Photonenemission mit den nach der bisherigen Methode gemessenen Schwankungsbreiten der stoffspezifischen Ergebnisse des jeweiligen Testsystems und der jeweiligen Prüfstufe erhalten werden. Ist diese Methode einmal in Bezug auf einen Prüforganismus standardisiert, können bestimmte Umweltgifte in Abhängigkeit von ihrer Konzentration nach spektraler Messung über die charakteristische Veränderung der Photonenemission des jeweiligen spezifischen Bioindikators erkannt oder zumindest eingegrenzt werden.

Darüber hinaus konnte beobachtet werden, daß die Lichtemissionen zweier voneinander getrennter, aber benachbarter biologischer Syteme miteinander in Korrelation treten. Die Emissionsraten der jeweiligen Systeme werden dabei über separate Lichtwege mit eigener Photomultiplieranordnung gemessen. Geringste Schwankungen in der Lichtemission des einen Systems, etwa über Beeinflussung durch Fremdstoffe, können über eine Feinstanalyse der korrelierten Photonenemission des anderen Systems nachgewiesen werden. Dies bietet die Möglichkeit, unmittelbar auftretende Umwelteinflüsse oder gar irreversible Schädigungen in dem einen Sytem über die korrelierte Veränderung im Emissionsverhalten des anderen biologischen Systems synchron zu verfolgen.

**Tabelle 1:** Ökotoxikologische Prüfungen der Grundstufe und Stufe 1

| Prüfmethode | Prüfparameter | Prüforganismus |
|---|---|---|
| **Grundstufe** | | |
| Akute Toxizität an einer Fischart | Tödliche Wirkung des Stoffes nach einmaliger Applikation während 48 bis 96 Stunden | Zebrabärbling *Brachydanio rerio* Sekundärkonsument |
| Akute Toxizität an einer Wasserflohart | Hemmung der Schwimmfähigkeit nach einmaliger Applikation während 24 bis 48 Stunden | Großer Wasserfloh *Daphnia magna* Primärkonsument |
| **Stufe 1** | | |
| Algentoxizität | Hemmung der Zellvermehrung (Wachstum) nach einmaliger Applikation während 72 Stunden | Grünalge *Scenedesmus subspicatus* Primärproduzent |
| Langfristige Daphnientoxizität | Ermittlung der No-Observed-Effect-Concentration und der Schwellenkonzentration in Bezug auf Beeinträchtigung der Reproduktionsleistung und tödliche Wirkung bei wiederholter (semistatisches) oder ständiger (Durchfluß-System) Applikation während mindestens 21 Tagen | Großer Wasserfloh *Daphnia magna* |
| Langfristige Fischtoxizität | Ermittlung der No-Observed-Effect-Concentration und der Schwellenkonzentration in Bezug auf tödliche und subletale Wirkungen bei wiederholter (semistatisches) oder ständiger (Durchfluß-System) Applikation während 14 bis 28 Tagen | Zebrabärbling *Brachydanio rerio* |
| Pflanzentoxizität | Hemmung des Wachstums von Saatgut (Verringerung der Biomasse) während 14 Tagen nach einmaliger Applikation | Hafer *Avena sativa* Rübe *Brassica rapa* Primärproduzent |
| Regenwurmtoxizität | Tödliche Wirkung des Stoffes während 14 Tagen nach einmaliger Applikation | Regenwurm *Eisenia foetida* Sekundärdestruent |
| **Stufe 2** | | |
| Individuelles stoffspezifisches Prüfprogramm | | |

Das Abklingverhalten nach vorheriger Anregung bildet ein besonders wichtiges Kriterium zur Beurteilung der Vitalität eines lebenden Systems, insbesondere bei der Bewertung von Umweltschädingungen sowie für prognostische Folgerungen. Geht man davon aus, daß Biophotonen u.a. einen großen Anteil an der Regulation des Zellgeschehens haben, dann ist zu erwarten, daß aus der Messung der Photonenemission biologischer Systeme auch Rückschlüsse auf die Konstitution der jeweiligen biologischen Systeme möglich sind. Als Kriterium

**Tabelle 2:** Liste der Stoffe aus dem "25-Stoffe-Programm"

| Nummer | Stoff |
|---|---|
| 1 | Hexachlorbenzol |
| 2 | Tris-(2,3-dibromylpropylphosphat |
| 3 | Benzol |
| 4 | Trichlorethylen (Trichlorethen) |
| 5 | Styroloxid |
| 6 | 1,1-Dichlorethylen (1,1-Dichlorethen) |
| 7 | Thioharnstoff |
| 8 | 1,2,4-Trichlorbenzol |
| 9 | 2,4,6-Trichlorphenol |
| 10 | 4-Chloranilin |
| 11 | 2,6-Dichlorbenzonitril |
| 12 | Pentachlorphenol |
| 13 | Atrazin |
| 14 | Lindan |
| 15 | 4-Nitrophenol |
| 16 | Tetrapropylenbenzosulfonat |
| 17 | Fluoranthen |
| 18 | n-Oktan |
| 19 | Freon 12 (FCKW 12) |
| 20 | Methylamin |
| 21 | Kaliumdichromat |
| 22 | Cadmiumchlorid |
| 23 | 2-Nitrophenol |
| 24 | Benzidin |
| 25 | Perylen |

für eine Umweltbelastung könnte dann die Reversibilität einer Änderung der Biophotonenemission nach Entfernung der schädigenden Einflußgröße definiert werden, während Umweltschädigungen irreversible Photonenemissionsänderungen hervorrufen. Es ist einleuchtend, daß vorzugsweise die Abklingparameter der Photonenemission der Lebensmittel und biologischen Systeme unter dem Aspekt der Kohärenz und Inkohärenz miteinander verglichen und in Beziehung gesetzt werden. Dies ist umso einfacher, als seit kurzem bekannt ist, daß allein der hyperbolische Verlauf einer Abklingkurve eine hinreichende Bedingung für die Kohärenz des Lichtspeichers darstellt (F.A.POPP. K.H. LI, 1989). Das Abklingverhalten ist dabei umso besser zu interpretieren, je kürzer die Meßintervalle der Photonenemission gewählt werden. Diese liegen in der Größenordnung von ms bis us. für Feinstmessungen vorzugsweise unter 25 ms.

Die Vorteile des oben beschriebenen Verfahrens liegen in der Verfügbarkeit einer Methode für eine umfassende Qualitätsprüfung, mit der der übergreifende Qualitätsbegriff im Sinne Erwin Schrödingers quantifizierbar wird. Im Gegensatz zu anderen "ganzheitlichen" Verfahren der Qualitätsprüfung erweist sich dieses Verfahren als objektiv reproduzierbar. Das Verfahren ist unabhängig von der bedienenden Person, nur von den Parametern der Messung selbst abhängig und führt immer wieder zu denselben Meßergebnissen innerhalb eines angebbaren Meßfehlerbereichs. Im Falle von Eigenemissionsmessungen überschreitet die Reproduzierbarkeit der Methode auch bei Messungen über längere Zeiträume nicht die Fehlergrenze von 10% und im Falle von Anregungsexperimenten nicht von 5%.

Mit der Photonenemission der Proben steht ein Strukturparameter zur Verfügung, der in unmittelbarem Zusammenhang mit den Lebensprozessen des dem Lebensmittel bzw. biologischen System bzw. biologischen Organismus zugrundeliegenden lebenden Systems steht bzw. mit den Wechselwirkungsprozessen von lebendem System und organisch-chemischer Verbindung. Jede noch so kleine Änderung der Struktur eines Lebensmittels oder biologischen Systems kann mit Hilfe einer äußerst empfindlichen Apparatur signifikant erfaßt werden. Die für die Durchführung solcher Messungen erforderliche Empfindlichkeit liegt im Leistungsbereich von $10^{-15}$ bis $10^{-17}$ Watt.

Die mit der Erfindung erzielbaren Vorteile in der praktischen Anwendung beruhen

- auf der hohen Reproduzierbarkeit des Verfahrens,
- auf der hohen Sensitivität der Methode gegenüber Veränderungen in der Qualität biologischer Systeme, gleichgültig ob es sich dabei um Alterungsprozesse, Sortenwahl, Aufbereitung, Konservierung oder Schadstoffbelastung handelt,
- auf der Möglichkeit, prospektive Aussagen über zu erwartende Qualitätsänderungen zu machen, z. B. bei bestimmter Lagerhaltung. Konservierung, Verarbeitung, Schadstoffbelastung u.ä.,
- auf der Aussieht, für die Qualität nachteilige oder schädliche Komponenten zu erkennen, sie zumindest teilweise zu identifizieren und zu entfernen,
- auf der im Vergleich mit herkömmlichen Verfahren äußerst kurzen Auswertungszeit, wobei schon innerhalb weniger Minuten aussagekräftige Ergebnisse erhalten werden können,
- auf der Möglichkeit, schnelle und präzise Aussagen über die Bioverträglichkeit neu konzipierter organisch-chemischer Verbindungen zu treffen,
- auf dem fast unmittelbaren Ansprechen auf Umweltschädigungen, die eine äußerst frühzeitige Schadensbegrenzung bzw. Schadensverhinderung erlauben,
- auf der Möglichkeit, das Verfahren mit Hilfe von Computerprogrammen oder Softwarepaketen zu automatisieren und somit eine standardisierte Auswertung der statischen und dynamischen Meßparameter zu ermöglichen.

Die vorliegende Erfindung bietet vielfache Möglichkeiten im industriellen Einsatz. Sie ist ein ideales Verfahren bei der Wareneingangs- und -ausgangskontrolle z. B. im Lebensmittelhandel. Weiterhin ergibt sich die Möglichkeit einer Feststellung von "biologisch" angebauter Ware im Hinblick auf eine Kontrolle dieser Warenbezeichnung. Bei ausreichender Kenntnis eines Produkts ist eine Identifizierung von "biologischer" und "nichtbiologischer" Ware möglich. Umgekehrt läßt sich aber auch eine systematische Verbesserung landwirtschaftlicher Produktionsmethoden erreichen. So können gezielt bestimmte Qualitätsmerkmale wie z.B die Haltbarkeit eines Lebensmittels oder die Vitalität von Samen erfaßt und kontrolliert werden. Dies bietet nicht nur für Produzenten und Händler neue Perspektiven der Qualitätssicherung und - optimierung, sondern auch für den Verbraucher eröffnet sich die Möglichkeit einer größeren Sicherheit bei der Auswahl des Nahrungsangebots. Aufgrund der fast unmittelbaren Ansprechbarkeit des Systems auf Umwelteinflüsse, wird der Umweltschutz in die Lage versetzt, nicht nur aufgetretene Schädigungen möglichst schnell zu erfassen und einzuordnen, sondern über die Möglichkeit einer Automatisierung sowohl rechtzeitig Alarm auszulösen als auch eine weitere Schädigung frühzeitig zu unterbinden.

Über das Abklingverhalten kann aber nicht nur der jeweils aktuelle Qualitätsinhalt bzw. nach Korrelation der dynamischen Meßparameter mit geeigneten phänotypischen Zustandgrößen der biologischen Systeme auch Prognosen für das weitere Qualitätsverhalten abgegeben werden. Infolge Induzierung adäquater chemischer Reaktionen zwischen biologischen Systemen und komplexen organisch-chemischen Verbindungen und der daraus resultierenden Biophotonenabstrahlung lassen sich Voraussagen treffen über die Verträglichkeit von biologischem System und organisch-chemischen Verbindungen. Dies bietet Einsatzmöglichkeiten des Verfahrens, die sich von der Beurteilung von Verpackungsmaterialien für Lebensmittel über Voraussagen der Gewebeverträglichkeit von Kunststoffen bei der Verwendung in der Chirurgie bis hin zu Prognosen über zu erwartende Nebenwirkungen neuer Arzneimittel erstrecken können.

Die Leistungsfähigkeit der Erfindung soll nun anhand der nachfolgenden Beispiele näher erläutert werden. Es zeigen:

*Beispiel 1*     eine Datenmatrix zur Erstellung einer Korrelations-, Varianz- und Faktorenanalyse für verschiedene Getreideproben (Körner, Mehl und Flocken),

*Beispiel 2*     die Reproduzierbarkeit des Verfahrens anhand willkürlich herausgegriffener Meßwerte einer Getreidesorte über einen Zeitraum von 5 Tagen,

*Beispiel 3*    die Lichtspeicherfähigkeit biologischer Systeme in Abhängigkeit von deren Qualität bzw. Haltbarkeit,

*Beispiel 4*    die Abhängigkeit der Lichtspeicherfähigkeit von Qualität und Menge des eingesetzten Probematerials,

*Beispiel 5*    die Korrelation des Abklingverhaltens der Photonenemission zu Vitalität bzw. Keimfähigkeit von Saatgut,

*Beispiel 6*    die Trennschärfe der Methode anhand der Qualitätsbestimmung von Saatgut,

*Beispiel 7*    die Abhängigkeit der Photonenemission von unterschiedlichen Spektralbereichen bei der Lichtanregung,

*Beispiel 8*    die Abhängigkeit der Photonenemission von unterschiedlichen Spektralbereichen bei der Messung,

*Beispiel 9*    das langfristige Lumineszenzverhalten eines Lebensmittels nach Anregung (Wurst),

*Beispiel 10*    Unterschiede in der Photonenemission bestrahlter Ware am Beispiel von Pfeffer, gemessen ein Jahr nach der Bestrahlung,

*Beispiel 11*    den Verlauf der Photonenemission eines Bioindikators unter der Einwirkung zunehmender Konzentrationen eines Herbizids,

*Beispiel 12*    die Änderung der Photonenemission verschiedener Bioindikatoren nach Zugabe verschiedener Giftstoffe,

*Beispiel 13*    Korrelationen der spontanen Lichtemission zweier benachbarter biologischer Systeme.

**Beispiel 1**

**a: Korrelationsanalyse**

Für eine Korrelationsanalyse wird die Haltbarkeit von vier verschiedenen Getreidesorten anhand der Datenmatrix bestimmt. Je 10 Proben von Körnern, Mehl und Flocken werden im Sommer (So) und anschliessend im Winter (Wi) gemessen und auf ihre Pentan- und Sauerstoffwerte untersucht. Diese bilden die Zustansparameter für die Haltbarkeit der Proben. Hohe Pentanwerte (und dementsprechend niedrige Sauerstoffwerte) sind ein Kriterium für geringe Haltbarkeit und umgekehrt.

Als Meßparameter werden herangezogen:
- Die Eigenintensität **DA** der Proben ohne externe Anregung in counts/sec,
- die Intensitätsmittelwerte **NB** der ersten 20 Meßwerte nach externer Anregung in counts/sec
- die Abklingfaktoren **A** einer angepaßten hyperbolischen Zerfallsfunktion nach externer Anregung
- die Fehlerabweichung $Q_H$ vom bestangepaßten hyperbolischen Abklingverhalten
- die normierte Fehlerabweichung $X_H$ vom bestangepaßten hyperbolischen Abklingverhalten
- das Verhältnis $X_{EH}$ der normierten Fehlerabweichungen von der bestangepaßten exponentiellen Abklingfunktion $X_E$ zur bestangepaßten hyperbolischen Abklingfunktion $X_H$
- das gleiche Verhältnis $Q_{EH}$ für nicht normierte Fehlerabweichungen
- der erste Meßwert $NB_o$ nach Anregung in 1000 counts/sec

Die Datenmatrix ist in Tabelle 3 wiedergegeben.

In Abbildung 1 sind die Pentan- und Sauerstoffwerte der entsprechenden Probenummern einander gegenübergestellt. Wie ersichtlich verhalten sich die beiden Parameter antikorrelativ, d.h. zunehmenden Pentanwerten und damit abnehmender Haltbarkeit entsprechen abnehmende Sauerstoffwerte.

**Abbildung 1:** Korrelation der Sauerstoff- und Pentanwerte

**Tabelle 3:** Datenmatrix zur Korrelationsanalyse

| Probe-nummer | Sorte | Zustand | Jahres-zeit | Pentan | O₂ | DA | NB |
|---|---|---|---|---|---|---|---|
| 1 | Reis | Körner | So | 0,4 | 20,0 | 4,4 | 259,7 |
| 2 | Reis | Körner | So | 0,8 | 20,6 | 1,9 | 882,7 |
| 3 | Reis | Körner | So | 1,2 | 20,6 | 2,2 | 1645,4 |
| 4 | Weizen | Körner | So | 0,2 | 20,4 | 0,4 | 45,1 |
| 5 | Weizen | Körner | So | 0,1 | 20,7 | 4,4 | 81,1 |
| 6 | Dinkel | Körner | So | 0,6 | 19,4 | 11,8 | 56,1 |
| 7 | Dinkel | Körner | So | 0,3 | 20,6 | 1,4 | 85,0 |
| 8 | Hafer | Körner | So | 0,1 | 20,6 | 2,1 | 2015,1 |
| 9 | Hafer | Körner | So | 75,3 | 17,9 | 26,5 | 10344,1 |
| 10 | Hafer | Körner | So | 0,4 | 20,4 | 4,5 | 340,9 |
| 11 | Reis | Körner | Wi | 1,7 | 20,0 | 6,6 | 251,7 |
| 12 | Reis | Körner | Wi | 7,2 | 19,7 | 2,3 | 2759,5 |
| 13 | Reis | Körner | Wi | 8,2 | 19,7 | 3,4 | 5610,9 |
| 14 | Weizen | Körner | Wi | 0,2 | 18,0 | 0,0 | 90.4 |
| 15 | Weizen | Körner | Wi | 0,5 | 20,2 | 0,9 | 118,0 |
| 16 | Dinkel | Körner | Wi | 1,7 | 0,0 | 0,0 | 158,0 |
| 17 | Dinkel | Körner | Wi | 1,0 | 19,6 | 1,9 | 308,1 |
| 18 | Hafer | Körner | Wi | 0,7 | 20,5 | 0,4 | 3817,5 |
| 19 | Hafer | Körner | Wi | 345,3 | 9,9 | 9,9 | 11714,4 |
| 20 | Hafer | Körner | Wi | 2,1 | 19,5 | 3,4 | 676,4 |
| 21 | Reis | Flocken | So | 2,5 | 20,0 | 25,3 | 75508,1 |
| 22 | Reis | Flocken | So | 5,3 | 19,4 | 110,3 | 42882,3 |
| 23 | Reis | Flocken | So | 2,9 | 20,6 | 73,3 | 26529,3 |
| 24 | Weizen | Flocken | So | 1,1 | 20,3 | 14,1 | 60244.4 |
| 25 | Weizen | Flocken | So | 4,2 | 20,3 | 14,3 | 53182,8 |
| 26 | Dinkel | Flocken | So | 2,1 | 20,4 | 12,7 | 56746,5 |
| 27 | Dinkel | Flocken | So | 0,4 | 20,6 | 11,0 | 56983,7 |
| 28 | Hafer | Flocken | So | 2,3 | 20,0 | 14,4 | 49269,3 |
| 29 | Hafer | Flocken | So | 23,5 | 19,2 | 31,0 | 36808,7 |
| 30 | Hafer | Flocken | So | 6,3 | 19,8 | 14,9 | 64077,9 |
| 31 | Reis | Flocken | Wi | 7,4 | 18,3 | 12,8 | 57783,7 |
| 32 | Reis | Flocken | Wi | 25,2 | 14,9 | 27,6 | 44019,2 |
| 33 | Reis | Flocken | Wi | 20.4 | 15,4 | 14,9 | 29489,1 |
| 34 | Weizen | Flocken | Wi | 46,2 | 16,6 | 5,8 | 76816,0 |
| 35 | Weizen | Flocken | Wi | 59,0 | 16,2 | 6,1 | 74654,8 |
| 36 | Dinkel | Flocken | Wi | 39,4 | 17,2 | 9,8 | 53630,7 |
| 37 | Dinkel | Flocken | Wi | 10,6 | 18,7 | 7,9 | 63840,4 |
| 38 | Hafer | Flocken | Wi | 49,7 | 13,3 | 39,1 | 54350,6 |
| 39 | Hafer | Flocken | Wi | 100,6 | 9,7 | 86,9 | 22671,2 |
| 40 | Hafer | Flocken | Wi | 38,3 | 15,2 | 10,2 | 60361,5 |
| 41 | Reis | Mehl | So | 1,1 | 20,0 | 2,2 | 234,7 |
| 42 | Reis | Mehl | So | 1,0 | 20,7 | 1,5 | 782,0 |
| 43 | Reis | Mehl | So | 1,1 | 20,6 | 2,2 | 1418,3 |
| 44 | Weizen | Mehl | So | 1.0 | 20,4 | 1,3 | 130,3 |
| 45 | Weizen | Mehl | So | 0,9 | 20,7 | 0,8 | 275,8 |
| 46 | Dinkel | Mehl | So | 1,1 | 20,1 | 1,4 | 146,6 |
| 47 | Dinkel | Mehl | So | 0,7 | 20,5 | 1,8 | 166,2 |
| 48 | Hafer | Mehl | So | 0,2 | 20,5 | 2,2 | 7526,4 |
| 49 | Hafer | Mehl | So | 22,9 | 18,2 | 10,4 | 9245,9 |
| 50 | Hafer | Mehl | So | 9,8 | 14,9 | 2,4 | 1158.4 |
| 51 | Reis | Mehl | Wi | 2,6 | 20,0 | 4,7 | 637,5 |
| 52 | Reis | Mehl | Wi | 4,5 | 20,5 | 1,6 | 1725,4 |
| 53 | Reis | Mehl | Wi | 5,4 | 19,2 | 2,8 | 2855,0 |
| 54 | Weizen | Mehl | Wi | 12,5 | 18,0 | 2,5 | 743,3 |
| 55 | Weizen | Mehl | Wi | 11,0 | 18,2 | 2,5 | 1692,1 |
| 56 | Dinkel | Mehl | Wi | 11,9 | 17,8 | 1,0 | 1001,2 |
| 57 | Dinkel | Mehl | Wi | 7,2 | 18,2 | 3,5 | 1933,7 |
| 58 | Hafer | Mehl | Wi | 1,1 | 19,3 | 0,6 | 11291,2 |
| 59 | Hafer | Mehl | Wi | 53,5 | 12,6 | 6,7 | 9352,5 |
| 60 | Hafer | Mehl | Wi | 63,9 | 6,0 | 6,9 | 2901,6 |

## Fortsetzung von Tabelle 3

| Probe-nummer | A | $Q_H$ | $X_H$ | $X_{EH}$ | $Q_{EH}$ | $NB_0$ |
|---|---|---|---|---|---|---|
| 1 | 1,5 | 1,7 | 0,4 | 5,0 | 5,7 | 3896,1 |
| 2 | 2,2 | 1,2 | 0,4 | 9,7 | 12,7 | 12846,8 |
| 3 | 2,4 | 0,9 | 0,2 | 12,2 | 17,8 | 24121,1 |
| 4 | 1,2 | 2,6 | 1,0 | 2,9 | 3,5 | 1041,8 |
| 5 | 1,4 | 3,6 | 0,7 | 3,0 | 3,3 | 1788,9 |
| 6 | 1,1 | 2,2 | 0,5 | 3,1 | 3,3 | 1098,7 |
| 7 | 1,1 | 3,7 | 1,1 | 2,9 | 3,3 | 1794,6 |
| 8 | 2,4 | 3,3 | 0,8 | 5,8 | 7,3 | 35068,9 |
| 9 | 2,7 | 0,5 | 0,1 | 29,7 | 32,7 | 154410,2 |
| 10 | 0,7 | 7,5 | 1,4 | 3,1 | 3,4 | 6396,3 |
| 11 | 1,4 | 0,7 | 0,2 | 7,8 | 9,6 | 2978,5 |
| 12 | 2,4 | 0,8 | 0,1 | 8,2 | 8,0 | 34252,0 |
| 13 | 2,5 | 1,0 | 0,2 | 8,5 | 7,9 | 73517,5 |
| 14 | 1,3 | 2,5 | 0,6 | 3,4 | 3,8 | 1640,0 |
| 15 | 1,4 | 3,7 | 1,0 | 2,6 | 3,0 | 2234,0 |
| 16 | 1,4 | 2,3 | 0,6 | 4,0 | 4,4 | 2673,5 |
| 17 | 1,9 | 1,4 | 0,4 | 7,7 | 9,8 | 4739,5 |
| 18 | 2,7 | 1,1 | 0,3 | 11,1 | 15,9 | 63316,0 |
| 19 | 2,8 | 0,5 | 0,1 | 23,0 | 22,0 | 173097,5 |
| 20 | 2,1 | 3,1 | 0,8 | 4,7 | 5,9 | 11634,5 |
| 21 | 3,4 | 2,7 | 0,3 | 12,6 | 15,4 | 1260528,0 |
| 22 | 2,8 | 4,7 | 0,7 | 6,0 | 7,4 | 730628,1 |
| 23 | 2,6 | 5,1 | 0,8 | 5,3 | 6,3 | 464594,7 |
| 24 | 3,4 | 1,1 | 0,2 | 20,5 | 20,6 | 973472,6 |
| 25 | 3,3 | 2,2 | 0,4 | 12,3 | 14,8 | 879033,3 |
| 26 | 3,3 | 1,6 | 0,3 | 16,1 | 19,2 | 935289,6 |
| 27 | 3,3 | 0,9 | 0,1 | 25,0 | 27,5 | 931125,7 |
| 28 | 3,2 | 2,4 | 0,5 | 11,2 | 14,6 | 837193,1 |
| 29 | 3,0 | 2,2 | 0,4 | 10,3 | 13,0 | 608953,6 |
| 30 | 3,4 | 2,7 | 0,5 | 10,7 | 12,6 | 1061587,0 |
| 31 | 3,4 | 1,4 | 0,2 | 16,1 | 18,0 | 1844569,0 |
| 32 | 2,9 | 6,5 | 1,0 | 5,4 | 6,4 | 744768,0 |
| 33 | 2,8 | 2,9 | 0,5 | 7,5 | 9,1 | 512459,0 |
| 34 | 3,4 | 0,9 | 0,1 | 21,8 | 18,7 | 1214229,0 |
| 35 | 3,4 | 1,1 | 0,2 | 19,9 | 19,5 | 1199450,0 |
| 36 | 3,3 | 1,0 | 0,2 | 19,6 | 22,9 | 884887,0 |
| 37 | 3,3 | 0,6 | 0,1 | 33,3 | 30,5 | 1030929,0 |
| 38 | 3,1 | 2,9 | 0,5 | 8,2 | 10,3 | 944510,5 |
| 39 | 2,5 | 6,2 | 0,9 | 4,3 | 4,8 | 405209,0 |
| 40 | 3,4 | 1,7 | 0,3 | 12,5 | 15,3 | 1005774,0 |
| 41 | 1,6 | 2,1 | 0,5 | 4,6 | 5,4 | 3838,1 |
| 42 | 2,1 | 1,7 | 0,4 | 8,0 | 10,4 | 11564,9 |
| 43 | 2,4 | 0,9 | 0,2 | 11,5 | 14,6 | 20413,2 |
| 44 | 1,5 | 3,7 | 1,0 | 3,2 | 3,6 | 2688,7 |
| 45 | 1,7 | 4,9 | 1,4 | 3,1 | 3,7 | 5394,7 |
| 46 | 1,5 | 3,6 | 0,9 | 3,3 | 3,7 | 2980,3 |
| 47 | 1,5 | 5,2 | 1,5 | 2,7 | 3,2 | 3265,4 |
| 48 | 2,8 | 0,8 | 0,2 | 18,4 | 26,5 | 125126,3 |
| 49 | 2,7 | 0,8 | 0,2 | 17,9 | 24,1 | 146010,3 |
| 50 | 2,1 | 5,7 | 1,6 | 3,9 | 4,7 | 20834,9 |
| 51 | 1,8 | 0,6 | 0,1 | 9,2 | 11,6 | 7455,0 |
| 52 | 2,4 | 1,2 | 0,2 | 5,3 | 4,8 | 20329,5 |
| 53 | 2,4 | 1,3 | 0,2 | 6,8 | 5,5 | 34155,0 |
| 54 | 2,0 | 2,8 | 0,8 | 4,4 | 5,4 | 12260,5 |
| 55 | 2,4 | 1,7 | 0,5 | 7,9 | 10,2 | 28100,0 |
| 56 | 2,2 | 1,7 | 0,4 | 6,2 | 7,7 | 16408,5 |
| 57 | 2,3 | 1,1 | 0,3 | 12,8 | 18,1 | 29110,0 |
| 58 | 3,0 | 0,6 | 0,1 | 18,1 | 21,8 | 178995,0 |
| 59 | 2,6 | 0,6 | 0,3 | 20,3 | 27,3 | 148326,0 |
| 60 | 2,0 | 2,3 | 0,4 | 6,5 | 7,0 | 47870,0 |

Schon ohne Korrelationsanalyse läßt sich aus der Datenmatrix erkennen, daß bei Körnern (schwächer ausgeprägt bei Mehl) mit zunehmendem Pentanwert und entsprechend abnehmendem Sauerstoffwert die Werte für DA, NB, NB$_o$, X$_H$, X$_{EH}$, und A ansteigen und daß bei Flocken mit zunehmendem Pentanwert nur DA ansteigt, während die Werte für NB, NB$_o$, X$_H$ und X$_{EH}$ abfallen.

Eine genaue Korrelationsanalyse aus der Datenmatrix ergibt die in Tabelle 4 wiedergegebenen Korrelierbarkeiten zwischen den Einflußgrößen und den Meßparametern:

**Tabelle 4: Korrelierbarkeiten zwischen Einflußgrößen und Meßparametern**

| Haltbarkeit | Sorte | Zustand |
|---|---|---|
| $X_H$ (99,9%) | A (98%) | DA (99,9%) |
| $Q_H$ (97%) | $X_H$ (78%) | NB (99,9%) |
| A (95%) | DA (68%) | A (99,9%) |
| DA (88%) | NB (58%) | $X_{EH}$ (99,9%) |
| NB (50%) | | $X_H$ (99%) |

Die Pentan- und Sauerstoffwerte verhalten sich nur zur Haltbarkeit korrelativ (99,9%). Mit Sorte und Zustand treten sie nur in wesentlich geringerem Maße in Korrelation. (Sorte: ca. 60%; Zustand: ca. 10%).

**b: Faktorenanalyse**

Die einzelnen Meßwerte aus der Datenmatrix lassen sich über die Faktorenanalyse in mehrere Komponenten $x_1f_1 + x_2f_2 + \ldots + x_7f_7$ zerlegen. Dabei bedeuten $f_1$ bis $f_7$ die Faktoren, mit denen die Getreideproben korrelativ gekennzeichnet werden können. Ihre unterschiedlichen Wichtigkeiten sind in Tabelle 5 wiedergegeben.

**Tabelle 5: Eigenwerte der Faktoren $f_1$ bis $f_7$**

| Faktor | Wichtigkeiten |
|---|---|
| $f_1$ | 4,448899 |
| $f_2$ | 1,236146 |
| $f_3$ | 0,619300 |
| $f_4$ | 0,525048 |
| $f_5$ | 0,136661 |
| $f_6$ | 0,019969 |
| $f_7$ | 0,013978 |

Den Beitrag der Faktoren $f_3$ bis $f_7$ zum jeweiligen Meßwert der einzelnen Parameter zeigt Tabelle 6.

**Tabelle 6:** Varianzen der Meßwerte unter Heranziehung der Faktoren $f_3$ bis $f_7$

| Meß-parameter | aus 3 Faktoren | aus 4 Faktoren | aus 5 Faktoren | aus 6 Faktoren | aus 7 Faktoren | Gesamt-Varianz |
|---|---|---|---|---|---|---|
| Pentan | 0,968064 | 0,981719 | 0,990959 | 0,994697 | 1,000000 | 1,000000 |
| $O_2$ | 0,978397 | 0,988001 | 0,999932 | 0,999971 | 1,000000 | 1,000000 |
| DA | 0,863985 | 0,956427 | 0,999532 | 0,999535 | 1,000000 | 1,000000 |
| NB | 0,926937 | 0,975643 | 0,991773 | 0,992522 | 1,000000 | 1,000000 |
| A | 0,836290 | 0,956626 | 0,999462 | 0,999780 | 1,000000 | 1,000000 |
| $X_H$ | 0,751639 | 0,991014 | 0,998939 | 0,999978 | 1,000000 | 1,000000 |
| $X_{EH}$ | 0,979033 | 0,979962 | 0,985458 | 0,999560 | 1,000000 | 1,000000 |

Daraus geht hervor, daß sich Körner (Mehl) und Flocken im wesentlichen nur durch die zwei Faktoren $f_1$ und $f_2$ kennzeichnen lassen, die zusammen mehr als 95% der Eigenschaften bestimmen. Aus Tabelle 5 läßt sich entnehmen, daß sich ihre Wichtigkeiten $|f_1|:|f_2|$ etwa wie 4:1 verhalten.

Für Körner und Flocken ergeben sich nach Rotation die in Tabelle 7 wiedergegebenen idealisierten Werte für die beiden Faktoren.

**Tabelle 7:** Werte für die ersten beiden Faktoren der Zustände "Korn" und "Flocke"

| Meß-werte | Körner | | Flocken | |
|---|---|---|---|---|
| | $f_1$ | $f_2$ | $f_1'$ | $f_2'$ |
| Pentan | 0,7 | -0,7 | 0,7 | 0,7 |
| DA | 0,8 | -0,3 | 0,8 | -0,3 |
| NB | 1,0 | -0,2 | -1,0 | 0,2 |
| A | 0,7 | 0,4 | -0,7 | 0,4 |
| $X_H$ | -0,7 | -0,4 | 0,7 | -0,4 |
| $X_{EH}$ | 1,0 | 0,2 | -1,0 | 0,2 |

Aus Tabelle 7 läßt sich entnehmen, daß die Faktoren von Körnern und Flocken durch Transformationen ineinander übergehen, indem teilweise bestimmte Korrelationen in Antikorrelationen umgewandelt werden. So ändert sich beim Übergang vom Zustand "Korn" zum Zustand "Flocke" in Bezug auf den Faktor 1 die Korrelation <$f_1$, NB> in <-$f_1$, NB>, <$f_1$, A> in <-$f_1$, A>, <$f_1$, $X_H$> in <-$f_1$, $X_H$> und <$f_1$, $X_{EH}$> in <-$f_1$, $X_{EH}$>. Beim Faktor 2 ändern sich entsprechend <$f_2$, Pentan> in <-$f_2$, Pentan> und <$f_2$, NB> in <-$f_2$, NB>.

Das bedeutet, daß bei Körnern die Eigenintensität sowie die Intensität nach Anregung stets mit der Haltbarkeit korrelieren, nicht aber bei Flocken. Beim Übergang von Körnern zu Flocken dreht sich, entsprechend der Vorzeichenumkehr von Faktor 1, der Einfluß der Zerfallskinetik gerade um.

Offenbar gibt es zwei, teilweise gegenläufige Mechanismen im Korn, von denen der eine, dem der Faktor 1 zugeordnet werden kann, Licht rasch abgibt. Es könnte sich dabei um geordnete oxidative Prozesse handeln. Die Antikorrelation zu $X_H$ beweist, daß es sich nicht um spontane Lichtemission handeln kann. Der zweite Wir-

13

kungsprozeß, dem $f_2$ zugeordnet werden kann, läßt sich als eine gewisse Aufnahmebereitschaft für Licht deuten. Auch dieser Faktor führt nach Anregung zu einem raschen Abklingen. Er könnte als eine geordnete Lichtspeicherung gedeutet werden. Mit der Speicherfähigkeit sinkt der Pentanwert, entsprechend einer höheren Haltbarkeit. Mit Ausnahme der Körner mit hohen Pentanwerten zeigen fast alle Proben eine starke Beteiligung des Faktors $f_2$.

Die Umkehrung von Komponenten des Faktors $f_1$ beim Übergang vom Korn zur Flocke weist darauf hin. daß der gleiche Prozeß, der im Korn als aktive chemische Reaktion abläuft, nur noch durch Licht oder andere Einflüsse (z.B. Ultraschall, Temperatur etc.) von außen angeregt werden kann, sobald die Vitalität des Korns verloren geht. Auch bei Betrachtung der Komponenten des Faktors $f_2$ liegt eine ähnliche Umorientierung, z.B. von aktiver Lichtspeicherfähigkeit zu passiver, sehr langsamer Lichtabgabe vor. Da die Faktorenanalyse aber keine physikalische Interpretation erlaubt, dürfen diese hypothetischen Schlußfolgerungen nicht überinterpretiert werden.

Als wesentliche Folgerung aus den angeführten statistischen Ergebnissen läßt sich die Tatsache ableiten, daß die Eigenschaften der Flocken einschließlich ihrer Haltbarkeit aus den Daten der Körner vorherbestimmt werden können, ebenso, wie aus den gewonnen Daten der Flocken auf die Eigenschaft der Körner, aus denen sie hervorgingen, rückgeschlossen werden kann.

Ganz allgemein gilt. Wenn die Probe x des Korns durch die meßbaren Komponenten $x_1 f_1 + x_2 f_2$ gekennzeichnet wird, worin $f_1$ und $f_2$ die in Tabelle 5 benannten Fatoren für die Körner darstellen, dann sind die Flocken näherungsweise durch die Komponenten $x_1 f_1' - x_2 f_2'$ bestimmt, wobei $f_1'$ und $f_2'$ durch die Vorzeichenumkehr der Komponenten NB, A, $X_H$ und $X_{EH}$ im Falle des Übergangs von $f_1$ nach $f_1'$ und der Komponenten Pentan und NB beim Übergang von $f_2$ nach $f_2'$ aus $f_1$ bzw. $f_2$ hervorgehen.

## Beispiel 2

Dieses Beispiel dient zur Demonstration der Reproduzierbarkeit der Meßwerte. In Tabelle 8a werden willkürlich herausgegriffene Meßwerte von 1 g der Getreidesorte Blé Alimentaire gezeigt, die im Abstand von 5 Tagen jeweils viermal hintereinander bestimmt wurden. In Tabelle 8b sind Kontrollmessungen an Styropor mit einer vollgefüllten Küvette wiedergegeben.

Durch Vergleich des prozentualen Fehlers aus Tabelle 8a und 8b läßt sich ersehen, daß die Streuungen durch Inhomogenitäten des Probematerials wesentlich höher liegen als die Meßfehler. Die Unterschiede, die grundsätzlich noch sicher mit der Methode erkannt werden können liegen in der Größenordnung von 5% der Meßgröße.

**Tabelle 8a:** Reproduzierbarkeit willkürlich herausgegriffener Meßwerte

| Datum der Messung | Messung Nr. | DA (counts/sec) | NBo (counts/sec) | NBw (counts/sec) |
|---|---|---|---|---|
| 29.06.1988 | 1 | 17,9 | 406.917 | 4.526 |
|  | 2 | 19,2 | 428.617 | 4.770 |
|  | 3 | 21,2 | 417.831 | 4.660 |
|  | 4 | 21,3 | 436.316 | 4.882 |
| Mittelwerte ± Streuung |  | 19,9 ± 1,6 | 422.420 ± 12.818 | 4.702 ± 141 |
| Fehler-% |  | 8% | 3% | 3% |
| Datum der Messung | Messung Nr. | DA (counts/sec) | NBo (counts/sec) | NBw (counts/sec) |
| 04.07.1988 | 1 | 15,4 | 413.628 | 4.609 |
|  | 4 | 17,9 | 424.478 | 4.725 |
|  | 3 | 15,9 | 409.743 | 4.566 |
|  | 4 | 16,9 | 412.068 | 4.589 |
| Mittelwerte ± Streuung |  | 16,3 ± 1,1 | 414.980 ± 6.530 | 4.622 ± 71 |
| Fehler-% |  | 6,7% | 1,6% | 1,5% |

DA: Eigenintensität

$NB_o$: Erster Wert nach Anregung der Probe

$NB_w$: Mittelwert der ersten 100 Werte nach Anregung der Probe

**Tabelle 8b:** Reproduzierbarkeit von Kontrollwerten an Styropor

| Messung Nr. | DA (counts/sec) | NBO (counts/sec) | NBW (counts/sec) |
|---|---|---|---|
| 1 | -0,4 | 53.791 | 1.096 |
| 4 | 1,3 | 53.390 | 1.087 |
| 3 | -1,6 | 52.875 | 1.075 |
| 4 | -0,4 | 51.389 | 1.049 |
| 5 | 0,1 | 51.045 | 1.040 |
| Mittelwerte ± Streuung | -0,2 ± 1,0 | 52.498 ± 1.220 | 1.069 ± 24,1 |
| Fehler | ± 1 count/sec | 2,3% | 2,3% |

**Beispiel 3**

In der hyperbolischen Abfallkinetik nach Anregung unterscheiden sich Energieinhalt und Speichervermögen von Flocken und Körnern in ihrer Korrelation zur Haltbarkeit. Stochastische Abhängigkeiten können dabei durch Regressionsgeraden veranschaulicht werden.

Der Speicherinhalt von Flocken erweist sich als umso höher, je niedriger der Pentanwert ist. In Abbildung 2 sind die jeweiligen Regressionsgeraden der verschiedenen Getreidesorten aus Beispiel 1 wiedergegeben. Weizen zeigt demnach die geringste Abhängigkeit des Speicherinhalts von der Haltbarkeit, Reis die stärkste.

Bei Körnern ist der Speicherinhalt in der hyperbolischen Abfallkinetik negativ zur Lichtspeicherfähigkeit korreliert, entsprechend einer negativen linearen Regression zwischen Speichervermögen und Pentanwerten. Mit wachsendem verfügbaren Speicherinhalt sinkt die Haltbarkeit im Gegensatz zu den Flocken. Die Korrelation scheint dabei relativ unabhängig von der Sorte zu sein. Die Regressionsgerade ist in Abbildung 3 wiedergegeben.

**Abbildung 2:** Speicherinhalt von Getreideflocken in Abhängigkeit von der Haltbarkeit (willkürliche Einheiten der Pentanwerte).

WK: Weizenkörner  **Pentan**  DK: Dinkelkörner
RK: Reiskörner  HK: Haferkörner

**Abbildung 3:** Speicherfähigkeit von Getreidekörnern in Abhängigkeit vom Pentanwert (willkürliche Einheiten).

**Beispiel 4**

Um die Lichtspeicherfähigkeit der Proben, die mit Haltbarkeit und anderen Qualitätsmerkmalen korreliert sind, technisch noch besser zu erfassen, wurde die Abhängigkeit NB der ersten 20 Meßwerte von der Menge des verwendeten Probematerials sowie das Abklingverhalten getestet.

Körner und Flocken höherer Qualität zeigen nach Anregung mit zunehmender Masse eher eine Sättigung in der Intensität der Photonenemission als minderwertige Körner und Flocken. Der Vorgang kann als Lichtspeichervermögen des Ensembles gedeutet werden. In den Abbildungen 4 werden die Abhängigkeiten der Photonenemissionen nach Anregung mit weißem Licht von der Masse der eingesetzten Körner wiedergegeben, und zwar in Abbildung 4a mit Haferkörnern hoher Qualität, in Abbildung 4b mit Haferkörnern niederer Qualität, in Abbildung 4c mit Weizenflocken hoher Qualität und in Abbildung 4d mit Weizenflocken niedriger Qualität.

**Abbildung 4a:** Abhängigkeit der Intensität der Photonenemission von der Menge angeregter Haferkörner mit hoher Qualität

**Abbildung 4b:** Abhängigkeit der Intensität der Photonenemission von der Menge angeregter Haferkörner mit niedriger Qualität

**Abbildung 4c:** Abhängigkeit der Intensität der Photonenemission von der Menge angeregter Weizenflocken mit hoher Qualität

**Abbildung 4d:** Abhängigkeit der Intensität der Photonenemission von der Menge angeregter Weizenflocken mit niedriger Qualität

Wesentliche Unterschiede der Photonenintensität in Abhängigkeit von der Dauer der Anregung zeigen sich im Vergleich von Weizenflocken hoher Qualität mit Weizenflocken niedriger Qualität. Wie aus Abbildung 4e mit Weizenflocken hoher Qualität deutlich wird, fällt die Intensität mit zunehmender Bestrahlungsdauer ab, entsprechend einer langsamer werdenden "Entleerung" von gespeicherten Photonen.

**Abbildung 4e:** Abhängigkeit der Photonenemission von der Bestrahlungsdauer bei Weizenflocken hoher Qualität

Der Anstieg der Photonenemission mit zunehmender Bestrahlungsdauer bei Weizenflocken niedriger Qualität, der in Abbildung 4f wiedergegeben wird, ist offensichtlich mehr auf geordnete chemische Prozesse zurückzuführen, die nach der Weißlichtanregung induziert wurden und mit zunehmender Dauer der Anregung einen Sättigungsgrad erreichen.

**Abbildung 4f:** Abhängigkeit der Photonenemission von der Bestrahlungsdauer bei Weizenflocken niederer Qualität

## Beispiel 5

Die Korrelation des Abklingverhaltens der Photonenemission nach Lichtanregung mit Vitalität bzw. Keimfähigkeit des Probematerials wird anhand zweier unterschiedlicher Arten von Samenkörnern demonstriert. Gemessen wurden

a) Zwei verschieden alte Chargen handelsüblicher Gartenkresse (*Lepidum sativum*); der Altersunterschied zwischen den Chargen betrug 1 Jahr. Von jeder der beiden Chargen wurden jeweils Proben von 2.5, 5.0, 7.5 und 10.0 g gemessen.

b) Eine Charge handelsüblicher Saatmais (*Zea mais*), wobei ein Teil der Charge durch kurzes Erhitzen (10 Minuten) im Autoklaven künstlich gealtert wurde. Den autoklavierten Körnern war diese Behandlung äußerlich nicht anzusehen. Es wurden nun künstlich zwei Chargen unterschiedlicher Qualität hergestellt: die qualitativ höherwertigere Charge enthielt nur unbehandeltes Saatgut, während die qualitativ niederwertigere Charge zu 70% aus unbehandeltem und zu 30% aus autoklaviertem Saatgut bestand.

Als Qualitätskriterium wurde in diesem Falle die Vitalität der Samen herangezogen, die parallel zur Messung nach bekannten Methoden bestimmt wurde (Keimfähigkeitsprüfung, biochemischer Keimtest/Tetrazoliumfärbung). Diese Keimprüfungen ergaben einen Keimausfall von ca. 30% bei der minderwertigeren Charge, was genau dem Prozentsatz an beigemischtem autoklaviertem Saatgut entsprach. Die Genauigkeit des Keimtests lag bei ± 2-3%. Von diesen beiden Chargen wurden jeweils Proben von 4, 8 und 12 g gemessen.

Das Probematerial wird abgewogen und nach Abfüllen in eine Quarzküvette 10 Minuten vor Beginn der Messung in die Meßapparatur gebracht. Nach Registrierung des dunkeladaptierten Mittelwertes der Probe wird zwei- bzw. dreimal über einen Zeitraum von einer Sekunde mit weißem Licht angeregt und sodann das Abklingverhalten registriert. Die Zeitspanne zwischen den einzelnen Anregungen muß so gewählt sein, daß jeweils ein vollständiges Abklingen gewährleistet ist. Die Zeitauflösung beträgt bei allen Messungen 500 ms.

In Abbildung 5 sind die Anfangsintensitäten der beiden Chargen von Kressesamen über der Probemenge aufgetragen. Gemessen und ausgewertet wurde der erste Wert 150 ms nach Anregung mit einer 150 W Wolframlampe. Die Werte der beiden Wiederholungsmessungen liegen dabei so dicht beieinander, daß die Fehlerbalken nicht mehr aufzulösen waren.

Außer in den deutlichen Intensitätsunterschieden, die als unterschiedliche Lichtspeicherfähigkeit zu interpretieren sind steigt die Photonenemission bei neuem Saatgut nicht in der Weise an, wie es bei altem Saatgut zu beobachten ist. Ab einer Menge von 7,5 g Probematerial tritt bei neuem Saatgut Sättigung auf.

In Abbildung 6 werden die Anfangsintensitäten der beiden Mais-Chargen nach Anregung mit weißem Licht wiedergegeben. Den einzelnen Datenpunkten liegen jeweils drei Meßwerte zugrunde. Die eingetragenen Fehlerbalken entsprechen den Standardabweichungen. Die Meßreihe wurde drei Tage nach dem Autoklavieren des Saatgutes aufgenommen. Der Meßwert über der Probemasse 0 g ist als Referenzwert für die Anregbarkeit der Meßkammer mit leerer Küvette aufzufassen.

**Abbildung 5:** Lichtemission von Kressesamen nach Anregung mit weißem Licht (Anfangsintensitäten).

**Abbildung 6:** Lichtemission von Maiskörnern nach Anregung mit weißem Licht (Anfangsintensitäten).

Auch in dieser Meßreihe tritt der bei der Messung unterschiedlicher Kressesamen zu beobachtende Effekt auf, daß die qualitativ höherwertigere im Vergleich zur minderwertigeren Probe mit zunehmender Masse einen Sättigungszustand erreicht.

Die Meßergebnisse zeigen. daß die eingesetzte Methode zur Qualitätsprüfung von Samen und Saatgut eingesetzt werden kann. Die Qualität von Samenkörnern, insbesondere in Bezug auf ihre Vitalität, ist deutlich mit einer durch Speicherfähigkeit für weißes Licht beschreibbaren Eigenschaft korreliert. Weniger vitales Saatgut gibt das eingestrahlte Licht unmittelbar nach Abschalten der Lichtquelle deutlich stärker ab als qualitativ höherwertigeres, vitales Saatgut. Die erhaltenen Daten zeigen selbst bei geringen Qualitätsunterschieden genügend große. statistisch signifikante Abweichungen. die auch der Forderung nach Reproduzierbarkeit genügen.

Die in diesem Beispiel dargelegten Messungen sollten nur dazu dienen, den Trend im Abklingverhalten von Proben unterschiedlicher Vitalität und Qualität zu demonstrieren. Für Feinanalysen, mit denen eine hohe Auflösung noch bei minimalen Unterschieden erzielt werden kann, ist es vorteilhaft, mit einer wesentlich größeren Zeitauflösung und zusätzlich in Abhängigkeit von spektraler Anregung zu messen. Bevorzugt sind hierbei Meßzeitintervalle unterhalb 25 ms.

## Beispiel 6

Zur Demonstration der Trennschärfe der Methode wurden die Anfangsintensitäten nach Anregung an einer Charge von 12 keimfähiger Maiskörner gemessen, denen 2 autoklavierte, nicht keimfähige Maiskörner zugemischt waren. Die Ergebnisse sind in Abbildung 7 wiedergegeben. Die beiden rechten Balken in dem Diagramm zeigen die Anfangsintensitäten der Probe mit den beiden autoklavierten Körnern, wobei der linke der beiden Balken den Mittelwert aus 3 Anregungen zeigt, bei denen die autoklavierten Körner ins Zentrum der Probe gebracht worden waren und somit nicht direkt bestrahlt werden konnten.

Der mit * gekennzeichnete Balken stellt den Mittelwert aus den bereits beschriebenen Anregungen und noch 2 zusätzlichen Anregungen nach Durchmischen der Probe und einer eintägigen Wartezeit dar. Beide Proben mit 2 zugemischten autoklavierten Maiskörnern unterscheiden sich deutlich von der Probe mit 12 g unbehandeltem Saatgut, wie man aus den auf die Balken aufgesetzten Standardabweichungen ersehen kann.

**Abbildung 7:** Vergleich der Anfangsintensitäten von 12 g unbehandelten Maiskörnern und 12 g Maiskörnern, denen 2 nicht keimfähige Körner beigemischt waren.

## Bespiel 7

Die Abhängigkeit der Photonenemission von unterschiedlichen Spektralbereichen bei der Lichtanregung wird in Abbildung 8 anhand der Emissionsraten von Milch wiedergegeben. Ausgewertet wurden die Mittelwerte NB der ersten 20 Meßdaten im Abstand von 500 ms nach einer Bestrahlungszeit von 60 s im jeweiligen Spektralbereich. Dazu wurden im Falle der Rotanregung das Filter RG 610 und im Falle der Blauanregung das Filter BG 25 der Firma Schott zwischen eine 150 Watt Wolframlampe der Firma Osram und die Probe geschaltet.

Gleichzeitig wurden die Messungen an zwei Milchchargen durchgeführt, die unterschiedlichen Behandlungsverfahren unterzogen waren: zum einen mit H-Milch (ultrahocherhitzt, homogenisiert) der Firma Hofgut, Schwäbisch Hall, zum anderen mit Frischmilch (pasteurisiert, homogenisiert) der Firma Landliebe Mannheim. Beide hatten einen Mindestfettgehalt von 3.8%.

Bemerkenswert ist hierbei, daß es sich bei Milch um zellfreies Probematerial handelt. Die Abstrahlung von kohärentem Licht ist nicht an das Vorhandensein von Zellstrukturen gebunden.

**Abbildung 8:** Abhängigkeit der Photonenemission von Milch vom Spektralbereich der Lichtanregung

Wie auf Seite 31, Zeilen 15-21 dargelegt, ist die Trennschärfe der Methode bei der Analyse des Abklingverhaltens umso besser, je kleiner die Zeitintervalle der Photonenemissionsmessungen gewählt werden. Diese können sich bis in den μs-Bereicherstrecken. Analoge Überlegungen gelten auch für das folgende Beispiel.

**Beispiel 8**

Dieses Beispiel demonstriert die Erfassung der Photonenemission der Proben in Abhängigkeit der Messung in verschiedenen definierten Spektralbereichen. Hierzu wurde jeweils ein Filter zwischen Probe und Meßgerät gebracht. Abbildung 9 zeigt das Emissionsverhalten verschiedener Getreideproben nach Rotlichtanregung in den verschiedenen Spektralbereichen der Filter BG3. BG39 und RG 610 der Firma Schott. Die Messung und Auswertung wurden analog Beispiel 7 durchgeführt. Das verschiedene spektrale Emissionsverhalten der Proben wird deutlich sichtbar.

NB rot (2Ø Werte)

**Abbildung 9:** Spektrale Abhängigkeit der Photonenemission verschiedener Getreideproben.

## Beispiel 9

In diesem Beispiel wird das mit der Haltbarkeit korrelierte Lumineszenzverhalten von Wurst (Salami) dokumentiert, wobei die Messungen über einen Zeitraum von 2-3 Monaten systematisch verfolgt wurden.

In Abbildung 10a und 10b werden die Mittelwerte der Eigenintensitäten DA bzw. der ersten 20 Meßwerte nach Anregung NB aus je 20 Messungen in 10 Meßintervallen in counts/500 ms wiedergegeben.

In Abbildung 10c werden die dazugehörigen jeweiligen Mittelwerte der mittleren Fehlerabweichung QE vom bestangepaßten exponentiellen Abklingverhalten aus den Mittelwerten NB der ersten 20 Meßwerte nach Anregung wiedergegeben.

DA

(Mittelwerte)

**Abbildung 10a:** Mittelwerte von je 20 Messungen der Eigenintensität von Edelsalami-Homogenat über einen Zeitraum von 110 Tagen.

NB (20 Werte)
(Mittelwerte)

**Abbildung 10b:** Mittelwerte NB der ersten 20 Meßwerte nach Weißlichtanregung von Edelsalami-Homogenat über einen
Zeitraum von 110 Tagen.

**Abbildung 10c:** Mittlere Fehlerabweichung vom bestangepaßten
exponentiellen Abklingverhalten von Edelsalami-
Homogenat über einen Zeitraum von 110 Tagen.

## Beispiel 10

Die Empfindlichkeit der Photonenemission im Hinblick auf das Abklingverhalten nach Anregung wird besonders deutlich bei der Messung der Photonenemission von Lebensmitteln nach Gamma-Bestrahlung. Noch nach einem Jahr läßt sich bestrahlte Ware über die Intensität der Biophotonenabstrahlung signifikant von unbestrahlter Ware unterscheiden.

In Abbildung 11 ist die Intensität der Photonenemission (in willkürlichenEinheiten) von bestrahltem Pfeffer (*Piper nigrum L.*) im Vergleichzu unbestrahltem wiedergegeben. Die Gamma-Bestrahlung erfolgte mittels einer für die Lebensmittelkonservierung üblichen Kobaltquelle während 5 sec mit einer Energiedosis von 5 Gray. Die Messung der Photonenemission des so angeregten Pfeffers sowie einer Blindprobe mit nicht der Strahlenquelle ausgesetztem Pfeffer wurde ein Jahr nach der Bestrahlung durchgeführt.

Wie aus Abbildung 11 ersehen werden kann, liegt die Photonenemission bestrahlter Ware selbst nach einem Jahr ca. 30% über der Emission unbestrahlter Ware.

**Abbildung 11:** Unterschiedliche Photonenemission von gamma-bestrahlem Pfeffer (*Piper nigrum L.*) und unbestrahltem Pfeffer ein Jahr nach der Bestrahlung.

## Beispiel 11

Um die Abhängigkeit der Biophotonenemission eines lebenden Systems von äußeren Einflußgrößen sowie seine Empfindlichkeit zu demonstrieren, wurde die Einwirkung des Herbizids Atrazin (2-Chlor-4-ethylamino-6-isopropylamino-s-triazin) auf die Grünalge Scenedesmus subspicatus als Bioindikator untersucht. Sowohl der Bioindikator als auch das Herbizid werden in den herkömmlichen ökotoxikologischen Prüfverfahren verwendet. Die Grünalge wird als Prüforganismus in Stufe 1 eingesetzt (Tabelle 2) und Atrazin ist in der 25-Stoffe-Liste an Position Nr. 13 angeführt (Tabelle 1).

Gesucht wird die Atrazinkonzentration, von der ab ein akuter Anstieg der Photonenemission signifikant nachweisbar ist. Dazu werden pro Messung je 9 ml Algen ca. 24 Stunden vor der Messung in offenen Gefäßen und das in aqua dest. gelöste Gift eine Stunde vor der Messung dunkel gestellt. Die Meßkammer wird unter Rotlicht eingerichtet. Die Referenzmessung erfolgt sodann mit gereinigter Quarzküvette und eingeschaltetem Magnetrührer (dieser muß auch mindestens 1 Stunde vor Meßbeginn im Dunkeln aufbewahrt werden). wird die Photonenemission (gemessen in counts) von Algen, Küvette und Rührer samt Kammer alle 3,6 sec aufsummiert. Es werden so insgesamt 1800 Werte (ca. 1 3/4 Stunden) aufgenommen. Nach 350 Werten (18 Minuten) erfolgt die Einspritzung von 1 ml Herbizidlösung im Dunkeln. Nach der Messung werden die Küvetten mit Alkohol und aqua dest. gereinigt. Daran anschließend kann eine zweite Referenzmessung gefolgt von einer weiteren Algenmessung mit erhöhter Herbizidkonzentration stattfinden. Während der Messungen müssen Temperatur und Luftfeuchtigkeit konstant gehalten werden.

Für jede Meßreihe wird jeweils der Mittelwert der Meßwerte 100-300 (vor Einspritzung des Herbizids) und 500-1000 (nach Einspritzung) nach Abzug der jeweiligen Referenzmessung ausgewertet. In Abbildung 12 sind der prozentuale Anstieg der Photonenemission der Algen nach Zugabe des Giftes gegen den Logarithmus der Atrazin-Konzentration in der Meßküvette aufgetragen.

**Abbildung 12: Prozentualer Anstieg der Photonenemission von 9 ml Algen mit steigenden Atrazin-Konzentrationen.**

In Abbildung 13a wird der Verlauf der Photonenemission von 9 ml Algen (6,3*10^6 Zellen/ml, 22 Stunden dunkel gestellt) nach Zugabe von 1 ml Atrazin-Lösung (10 mg/l) wiedergegeben und in Abbildung 13b die Emission von 9 ml Algen (4,0*10^6 Zellen/ml, 26,5 Stunden dunkel gestellt) bei Zugabe einer Atrazin-Konzentration von 3,3 mg/l. Abbildung 13c schließlich zeigt als Referenzmessung die Photonenemission von 9 ml Algen (6,3*10^6 Zellen/ml, 25 Stunden dunkel adaptiert) nach Zugabe von 1 ml Aqua dest. Die Zugaben von Atrazin bzw. Aqua dest. erfolgten jeweils bei einem Abszissenwert von 0,35*10^3.

**Abbildung 13a:** Photonenemission von 9 ml Algen nach Zugabe von 1 ml Atrazin-Lösung der Konzentration 10 mg/l.

**Abbildung 13b:** Photonenemission von 9 ml Algen nach Zugabe von 1 ml Atrazin-Lösung der Konzentration 3,3 mg/l.

A6-5.CH1 (1888)

**Abbildung 13c:** Photonenemission von 9 ml Algen nach Zugabe von
1 ml aqua dest.

### Beispiel 12

In diesem Beispiel wird die Wirkung von Giftstoffen auf verschiedene Bioindikatoren demonstriert. Als solche wurden verwendet: das Pantoffeltierchen *Paramecium caudatum*, die bereits in Beispiel 10 verwendete einzellige Alge Scenedesmus subspicatus und Keimlinge der Kresse *Lepidium* sativum.

In Abbildung 14a ist die Änderung der Photonenintensität von 13 ml des einzelligen Ziliaten *Paramecium caudatum* mit einer Zelldichte von $10^3$/ml in einer 18 ml fassenden Quarzküvette nach Zugabe von 2 ml verdünnter Essigsäure (0,1 ml 99% HAc / Liter) wiedergegeben. Die Zugabe erfolgte nach 116 sec. Als Referenzmessung zeigt Abbildung 14b den Intensitätsverlauf nach Zugabe von 2ml aqua dest. 103 sec nach Meßbeginn.

Wie ersichtlich steigt die Photonenintensität nach Zugabe der Essigsäure um ca. 40% des Wertes vor der Zugabe und fällt dann langsam während ca. 125 sec auf den Anfangswert ab. Nach Zugabe des Lösungsmittels aqua dest. ändert sich die Photonenintensität praktisch nicht.

2ml HAc(99%. 0.1ml/l)) bei 1:6

**Abbildung 14a:** Photonenemission von *Paramecium caudatum* nach Zugabe von 2ml verdünnter Essigsäure

2ml Aqua dest. bei 103

**Abbildung 14b:** Photonenemission von *Paramecium caudatum* nach Zugabe von 2ml aqua dest.

In Abbildung 15a ist die Änderung der Photonenintensität von 13 ml der einzelligen Alge *Scenedesmus subspicatus* mit einer Zelldichte von $4*10^6$/ml in einer 18 ml fassenden Quarzküvette nach Zugabe von 2 ml Cadmiumchlorid-Lösung (0,5 mg / Liter) wiedergegeben. Die Zugabe erfolgte nach 107 sec. Als Referenzmessung zeigt Abbildung 15b den Intensitätsverlauf nach Zugabe von 2ml aqua dest. 104 sec nach Meßbeginn.

Auch hier steigt die Photonenintensität nach Zugabe des Cadmiumchlorids um ca. 32% des Wertes vor der Zugabe und fällt dann langsam während ca. 110 sec auf den Anfangswert ab. Nach Zugabe des Lösungsmittels aqua dest. bleibt die Photonenintensität wiederum unverändert.

2ml Cad.-Chlorid (0.5mg/l) bei 107

**Abbildung 15a:** Verlauf der Photonenemission von *Scenedesmus subspicatus* nach Zugabe von 2ml Cadmiumchlorid Lösung

**Abbildung 15b:** Verlauf der Photonenemission von *Scenedesmus subspicatus* nach Zugabe von 2ml aqua dest.

Die Wirkung von Giftstoffen auf die verzögerte Lichtemission nach Anregung wird anhand der Zugabe von Cadmiumchlorid zu Keimlingen der Gartenkresse *Lepidium sativum* in Abbildung 16 gezeigt.

Etwa 60 Kressesamen wurden in einer Petrischale 3 Tage lang bei Zimmertemperatur keimen gelassen. Die ausgekeimten Jungpflanzen wurden nach einer Dunkeladaptation von ca. 30 Minuten zur Messung in die Meßkammer gebracht. Zunächst wurde die Probe viermal hintereinander für die Dauer von 1 Sekunde mit Rotlicht bestrahlt, sodann jeweils über 500 Zeitintervalle von 1 Sekunde das Abklingverhalten registriert. Danach wird die Probe mit 2 ml einer Cadmiumchlorid-Lösung der Konzentration 6 pg/l vergiftet und erneut viermal das Abklingverhalten nach Anregung mit Rotlicht gemessen.

Um die deutlichen Unterschiede im Abklingverhalten nach der Vergiftung sowie die gute Reproduzierbarkeit der Messungen zu veranschaulichen, wurde für jedes Meßintervall der Mittelwert aus den 4 Abklingkurven vor (obere Kurve) und nach der Vergiftung (untere Kurve) berechnet und zusammen mit der jeweiligen Standardabweichung aufgetragen. In Abbildung 16 werden die ersten 60 Meßwerte dieser Auftragung wiedergegeben.

**Abbildung 16:** Verzögerte Lichtemission nach Rotlichtanregung der Kresse *Lepidium sativum* vor (obere Kurve) und nach Vergiftung (untere Kurve) mit 2 ml CdCl$_2$ (5 pg/l).

## Beispiel 13

Zwischen den Lichtemissionen zweier benachbarter biologischer Systeme bilden sich Korrelationen aus. Eine Analyse dieser Korrelationen in Abhängigkeit von Fremdstoffen in einem der Systeme erlaubt genaue und schnelle Aussagen über eine auftretende Umweltbelastung bzw. Umweltschädigung. In Abbildung 17 werden die Korrelationen in den spontanen Lichtemissionen von zwei separaten Populationen des Leuchtbakteriums *Bacterium phosphorescens* wiedergegeben. Aufgetragen sind die im vorgegebenen Zeitintervall emittierten Lichtquanten gegen die Zeit.

**Abbildung 17:** Korrelation der Lichtemissionen zweier voneinander getrennter Populationen des Leuchtbakteriums *Bacterium phosphorescens*

## Patentansprüche

1.  Verfahren zur Bestimmung und Prüfung der Qualität und/oder Qualitätsänderung biologischer Systeme durch Messung der ultraschwachen Photonenemission, dadurch gekennzeichnet,

    daß aus einer Vielzahl vorgegebener, unterschiedlich konditionierter Proben eines jeweiligen biologischen Systems sowohl statische Kennwerte als auch aus dem Abklingverhalten der ultraschwachen Photonenemission nach vorheriger Anregung ermittelte dynamische Kennwerte zusammen mit zuvor bestimmten, die einzelnen Qualitätsmerkmale des jeweiligen biologischen Systems charakterisierenden Analysewerten und/oder Zustandsparametern aus den jeweils vorgegebenen Proben mit dem Verfahren der vergleichenden statistischen Analyse, d.h. des multivariaten Analyseverfahrens, ausgewertet werden, und daß mit den erhaltenen Ergebnissen über die Korrelation der Analysewerte und/oder Zustandparameter der einzelnen Proben mit den entsprechenden, aus der ultraschwachen Photonenemission der einzelnen Proben ermittelten statischen und dynamischen Kennwerten die Qualität des jeweiligen biologischen Systems normiert und die Qualität einer beliebigen Probe des jeweiligen biologischens Systems durch Vergleich der daraus mittels der ultraschwachen Photonenemission ermittelten Kennwerte mit den normierten Kennwerten bestimmt wird.

2.  Verfahren nach Anspruch 1, dadurch gekennzeichnet, daß als statische Kennwerte die Intensitäten der Eigenemission der Proben ohne externe Anregung und/oder die Mittelwerte der ersten 20-50 Intensitätsmeß nach externer Anregung dienen, und als dynamische Kennwerte die Abklingfaktoren einer angepaßten hyperbolischen Zerfallsfunktion und/oder die Fehlerabweichung vom bestangepaßten hyperbolischen Abklingverhalten und/oder die normierte $X^2$-Fehlerabweichung vom bestangepaßten hyperbolischen Abklingverhalten und/oder das Verhältnis von der normierten $X^2$-Fehlerabweichung der bestan-

gepaßten exponentiellen Abklingfunktion zur normierten Fehlerabweichung der bestangepaßten hyperbolischen Abklingfunktion und/oder das Verhältnis der Fehlerabweichung von der bestangepaßten exponentiellen Abklingfunktion zur Fehlerabweichung der bestangepaßten hyperbolischen Abklingfunktion.

3. Verfahren nach den Ansprüchen 1 und 2, dadurch gekennzeichnet, daß als Meßgerät für den Nachweis der ultraschwachen Photonenemission der Proben ein Photometer mit einer Empfindlichkeit von mindestens $10^{-15}$ Watt verwendet wird.

4. Verfahren nach den Ansprüchen 1-3, dadurch gekennzeichnet, daß das Abklingverhalten der Photonenemission nach Anregung über einen definierten Zeitraum gemessen wird, wobei die Meßintervalle vorzugsweise kleiner als 25 Millisekunden betragen.

5. Verfahren nach einem der Ansprüche 1-4, dadurch gekennzeichnet, daß die Anregung der biologischen Systeme mittels elektromagnetischer Strahlung erfolgt, wobei vorzugsweise bei einer Leistung im Bereich zwischen 100 und 300 Watt angeregt wird und die Anregung vorzugsweise mit diskreten Wellenlängen erfolgt, oder mittels Ultraschall, vorzugsweise mit diskreten Wellenlängen und Energien zwischen 10 und 100 Watt, oder thermisch, vorzugsweise im Temperaturintervall von 0°C - 60°C.

6. Verfahren nach Anspruch 1, dadurch gekennzeichnet, daß die Intensität der Eigenemission im Bereich von 300-800 nm gemessen wird.

7. Verfahren nach einem der vorhergehenden Ansprüche, dadurch gekennzeichnet, daß die ultraschwache Photonenemission der Proben in verschiedenen Spektralbereichen gemessen wird.

8. Verfahren nach einem der vorhergehenden Ansprüche, dadurch gekennzeichnet, daß die ultraschwache Photonenemission in Abhängigkeit von der Menge des biologischen Systems erfaßt wird.

9. Verfahren nach einem der vorhergehenden Ansprüche, dadurch gekennzeichnet, daß das biologische System vor Messung der ultraschwachen Photonenemission einer enzymatischen in-vitro-Verdauung unterzogen wird.

10. Verfahren nach einem der vorhergehenden Ansprüche, dadurch gekennzeichnet, daß die ultraschwache Photonenemission eines Verbrauchers des biologischen Systems gemessen wird.

11. Verfahren nach einem vorhergehenden Ansprüche, dadurch gekennzeichnet, daß die Kennwerte der ultraschwachen Photonenemissionen eines jeweiligen biologischen Systems mittels Korrelations-, Varianz- und Faktorenanalyse ausgewertet werden.

12. Verfahren nach einem der vorhergehenden Ansprüche zum Nachweis der Bioverträglichkeit von organisch chemischen Verbindungen.

13. Verfahren nach einem der Ansprüche 1-11, zum Nachweis einer Umweltbelastung und/oder Umweltschädigung.

14. Verfahren nach einem der Ansprüche 1-11, dadurch gekennzeichnet, daß die Korrelation der Photonenemissionen zweier benachbarter biologischer Systeme bestimmt und zum Nachweis von Umwelteinflüssen und/oder Umweltschädigungen verwendet wird.

15. Verfahren nach einem der Ansprüche 1-11 zur Unterscheidung von für Konservierungszwecke bestrahlter Ware von unbestrahlter Ware.

## Claims

1. A method for determining and testing the quality and/or quality changes of biological systems in using measurements of ultraweak photon emissions, characterized in that,
out of a multitude of dispensed differently conditioned samples of a respective biological system, static characteristic values as well as dynamic characteristic values obtained from the damping behaviour of the ultraweak photonemission after previous excitation are evaluated together with previously determined test results characterizing the various quality properties of the respective biological system and/or with state parameters from the respective dispensed samples, by means of the comparative statistic analysis, that is to say by means of multivariant analysis method, and that, in using the obtained results, the quality of the respective biological system is standardized by means of the correlation of the test results and/or the state parameters of the various samples with the corresponding static and dynamic characteristic values obtained from said ultraweak photon emission of the various samples, and the quality of an arbitrary sample of the respective biological system is determined by comparing the characteristic values obtained therefrom by the ultraweak photon emission with the standardized characteristic values.

2. A method according to claim 1, characterized in that the intensities of the self-emission of the samples without external excitation and/or the mean values of the first 20-50 measured values of the intensity after external excitation serve as static characteristic values, and in that the damping factors of a matched hyperbolic decay function and/or the error deviation from the optimally matched hyperbolic damping behaviour and/or the standardized $X^2$-error deviation from the optimally matched hyperbolic damping behaviour and/or the ratio of the standardized $X^2$-error deviation of the optimally matched exponential decay function to the standardized error deviation of the optimally matched hyperbolic decay function and/or the ratio of the error deviation of the optimally matched exponential decay function to the error deviation of the optimally matched hyperbolic decay function serve as the dynamic characteristic values.

3. A method according to claims 1 and 2, characterized in that a photometer having a delicacy of at least $10^{-15}$ Watt is used as metering device to determine the ultraweak photon emission of the samples.

4. A method according to claims 1 to 3, characterized in that the damping behaviour of the photon emission after excitation is measured over a defined period of time, the measuring intervals being preferably less than 25 mili m.s.

5. A method according to one of claims 1 to 4, characterized in that the biological systems are exited by means of electromagnetic radiation, the excitation being preferably executed at a performance in the range between 100 and 300 Watt using an excitation preferably at discrete wave lengths, or by means of ultrasonics preferably at discrete wave lengths and with energies between 10 and 100 Watt, or thermally, preferably in the temperature interval of 0°C - 60°C.

6. A method according to claim 1, characterized in that the intensity of the self-emission is measured in the range of 300-800 nm.

7. A method according to anyone of the previous claims, characterized in that the ultraweak photon emission of the samples is determined in different regions of the spectrum.

8. A method according to anyone of the previous claims, characterized in that the dependency of the ultraweak photon emission from the amount of the biological systems is determined.

9. A method according to anyone of the previous claims, characterized in that, before the determination of the ultraweak photon emission, the biological system is subjected to an enzymatical in-vitro digestion.

10. A method according to anyone of the previous claims, characterized in that the ultraweak photon emission of a consumer of the biological system is determined.

11. A method according to anyone of the previous claims, characterized in that the characteristic values of a respective biological system are evaluated by means of correlation analysis, variance analysis and factor analysis.

12. A method according to anyone of the previous claims for the determination of the biotolerance of organochemical compounds.

13. A method according to anyone of claims 1 to 11 for the determination of an environmental load and/or an environmental damage.

14. A method according to anyone of claims 1 to 11, characterized in that the correlation of the photon emission of two adjoining biological systems is determined and used to detect environmental influences and/or environmental damages.

15. A method according to anyone of claims 1 to 11 to distinguish food being irradiated for purposes of conservation from non-irradiated food.

**Revendications**

1. Procédé pour la détermination et le contrôle de la qualité et/ou du changement de la qualité de systèmes biologiques par mesure de l'émission ultrafaible de photons, caractérisé en ce que, parmi un grand nombre d'échantillons donnés, conditionnés différemment, d'un système biologique considéré, on évalue aussi bien les données caractéristiques statiques que les données caractéristiques dynamiques, déterminées après excitation préalable, à partir de la décroissance de l'émission ultrafaible de photons conjointement avec les données analytiques établies au préalable caractérisant les propriétés qualitatives particulières du système biologique considéré et/ou les paramètres d'état établies préalablement des échantillons donnés, chaque fois, à l'aide du procédé d'analyse statistique comparative, c'est-à-dire du procédé analytique de multivariance, et en ce que, à l'aide des résultats obtenus et par corrélation des données analytiques et/ou des paramètres d'état des échantillons individuels avec les données caractéristiques statiques et dynamiques correspondantes, déterminées à partir de l'émission ultrafaible de photons des échantillons individuels, on standardise la qualité du système biologique considéré et on détermine la qualité d'un échantillon quelconque du système biologique considéré par comparaison de la donnée caractéristique déterminée sur l'échantillon à partir de l'émission ultrafaible de photons avec les données caractéristiques standardisées.

2. Procédé selon la revendication 1, caractérisé en ce que, en tant que données caractéristiques statiques, on utilise les intensités de l'émission propre des échantillons sans excitation externe et/ou les valeurs moyennes des premières 20 à 50 valeurs d'intensités mesurées après excitation externe, et, en tant que données caractéristiques dynamiques, on utilise les facteurs de décroissance d'une fonction hyperbolique corrigée de dégradation cellulaire et/ou la tolérance d'erreur du comportement hyperbolique le mieux corrigé de décroissance et/ou de la tolérance d'erreur $X^2$ standardisée du comportement hyperbolique le mieux corrigé de décroissance et/ou le rapport de la tolérance d'erreur standardisée $X^2$ de la fonction exponentielle le mieux corrigée de décroissance sur la tolérance d'erreur standardisée de la fonction hyperbolique le mieux corrigée de décroissance et/ou le rapport de la tolérance d'erreur de la fonction exponentielle le mieux corrigée de décroissance sur la tolérance d'erreur de la fonction hyperbolique le mieux corrigée de décroissance.

3. Procédé selon les revendications 1 et 2, caractérisé en ce que, en tant qu'appareil de mesure pour la mise en évidence de l'émission ultrafaible de photons des échantillons, on utilise un photomètre ayant une sensibilité d'au moins $10^{-15}$ Watt.

4. Procédé selon les revendications 1 à 3, caractérisé en ce que le comportement de la décroissance de l'émission de photons après excitation est mesuré dans un espace de temps défini, l'intervalle de mesure étant de préférence inférieur à 25 millisecondes.

5. Procédé selon l'une des revendications 1 à 4, caractérisé en ce que l'excitation des systèmes biologiques se fait au moyen de rayonnement électromagnétique, en étant excités de préférence à une puissance comprise dans le domaine situé entre 100 et 300 Watt et l'excitation a lieu de préférence à des longueurs d'ondes discrètes, ou bien au moyen d'ultrasons, de préférence à des longueurs d'ondes discrètes et avec des énergies comprises entre 10 et 100 Watts, ou bien de manière thermique, de préférence dans un intervalle de température compris entre 0°C et 60°C.

6. Procédé selon la revendication 1, caractérisé en ce que l'intensité de l'émission propre est mesurée dans un domaine allant de 300 à 800 nm.

7. Procédé selon l'une des revendications précédentes, caractérisé en ce que l'émission ultrafaible de photons des échantillons est mesurée dans différents domaines spectraux.

8.  Procédé selon l'une des revendications précédentes, caractérisé en ce que l'émission ultrafaible de photons est détectée en fonction de la quantité du système biologique.

9.  Procédé selon l'une des revendications précédentes, caractérisé en ce que le système biologique est soumis, avant la mesure de l'émission ultrafaible de photons, à une digestion enzymatique in-vitro.

10. Procédé selon l'une des revendications précédentes, caractérisé en ce qu'on mesure l'émission ultrafaible de photons d'un consommateur du système biologique.

11. Procédé selon l'une des revendications précédentes, caractérisé en ce qu'on évalue les données caractéristiques des émissions ultrafaibles de photons d'un système biologique considéré au moyen de l'analyse de corrélation, de variance et des facteurs.

12. Procédé selon l'une des revendications précédentes pour la mise en évidence de la biocompatiblité de composés chimiques organiques.

13. Procédé selon l'une des revendications 1 à 11, pour la mise en évidence d'une pollution de l'environnement et/ou d'une dégradation de l'environnement.

14. Procédé selon l'une des revendications 1 à 11, caractérisé en ce qu'on détermine la corrélation d'émission de photons de deux systèmes biologiques voisins et on l'utilise pour la mise en évidence d'effet sur l'environnement et/ou de dégradation de l'environnement.

15. Procédé selon l'une des revendications 1 à 11, pour la différenciation de denrées irradiées dans un but de conservation et de denrées non irradiées.